# FASCICULE DE BREVET EUROPEEN

(11) **EP 2 655 939 B1**
(45) Date de publication et mention de la délivrance du brevet: **01.07.2015**
(21) Numéro de dépôt: 11808637.0
(22) Date de dépôt: 21.12.2011
(51) Int. Cl.: F16J 9/00, F16J 10/02, H01H 33/88

(54) **DISPOSITIF À PISTON ET CYLINDRE POUR APPAREILLAGES ÉLECTRIQUES À MOYENNE ET HAUTE TENSION**
KOLBENZYLINDEREINHEIT FÜR MITTEL- BIS HOCHSPANNUNGSGERÄTE
PISTON-CYLINDER ASSEMBLY FOR MEDIUM- OR HIGH-VOLTAGE ELECTRICAL APPLIANCES

(30) Priorité: 23.12.2010 FR 1061216
(43) Date de publication de la demande: 30.10.2013
(73) Titulaire: ALSTOM Technology Ltd, 5400 Baden (CH)
(72) Inventeur: JOSSENS, Camille, F-69100 Villeurbanne (FR); KIEFFEL, Yannick, F-38440 Saint-jean De Bournay (FR)
(74) Mandataire: Ilgart, Jean-Christophe
(86) Numéro de dépôt international: PCT/EP2011/073680
(87) Numéro de publication internationale: WO 2012/085145

(56) Documents cités:
- WO-A1-03/042548
- FR-A1- 2 747 756
- FR-A1- 2 868 875
- US-A- 3 695 149

## Description

### DOMAINE TECHNIQUE

L'invention concerne un dispositif à piston et cylindre pour un appareillage électrique à moyenne et haute tension, en particulier pour un disjoncteur à haute tension.

### ÉTAT DE LA TECHNIQUE ANTÉRIEURE

Dans les appareillages électriques à haute et moyenne tension, on utilise des pièces en mouvement pour assurer la coupure des courants.

Ces pièces en mouvement sont principalement constituées par un ensemble de type piston/cylindre.

Lors du mouvement rectiligne du piston dans le cylindre, les revêtements ainsi que les joints utilisés doivent entre autres répondre aux exigences suivantes :
- assurer l'étanchéité pour permettre une augmentation de la pression du gaz diélectrique tout en évitant les transferts intempestifs du gaz ;
- résister à la température élevée du gaz échauffé par le plasma au moment de la coupure ;
- résister aux produits chimiques générés lors de la coupure ;
- résister au rayonnement ultraviolet ;
- maintenir un coefficient de glissement le plus faible possible pour minimiser l'énergie mécanique nécessaire pour la manoeuvre de l'appareil électrique ;
- résister au vieillissement pendant une durée supérieure à trente ans ;
- ne pas générer de poussières, car ces poussières sont préjudiciables et risquent de provoquer des amorçages dans l'appareil.

Pour satisfaire à ces nombreux critères, il est souvent nécessaire d'utiliser des assemblages complexes, difficiles à mettre en oeuvre et coûteux.

L'invention concerne, plus particulièrement, les dispositifs à piston et cylindre dans lesquels le piston qui coulisse à l'intérieur du cylindre appelé cylindre de contact, est muni d'une bande de guidage sur au moins une de ses surfaces en contact avec la surface interne du cylindre.

Le rôle de la bande de guidage est principalement de guider la translation du piston dans le cylindre de contact, et d'éviter le contact aluminium/aluminium entre le cylindre de contact et le piston valve. La bande de guidage peut être en contact, par exemple, avec du SF₆ pollué.

Il est connu d'utiliser une bande de guidage en poly(tétrafluoroéthylène) ou PTFE (Téflon^{®}) chargé à 60% en bronze.

Cette conception de la bande de guidage permet de réaliser 10000 cycles d'ouverture et de fermeture du système piston/cylindre.

Au-delà, il peut survenir une usure d'adhérence entre la bande de guidage et la surface interne en aluminium du cylindre, un contact aluminium/aluminium peut alors se produire, puis une usure abrasive.

Les frottements entre la bande de guidage en Téflon^{®} chargée en bronze et le cylindre de contact en aluminium peuvent ainsi induire le transfert d'aluminium, la formation de particules d'aluminium conductrices, et l'incrustation de telles particules sur la bande de guidage. Cela conduit à l'usure de la bande de guidage et à la formation de rayures ou stries dans le cylindre de contact, en d'autres termes à une détérioration de la bande de guidage en PTFE chargée en bronze et à un endommagement de la surface intérieure du cylindre de contact.

Les risques qui en découlent sont une usure des disjoncteurs, la présence de particules métalliques sur les isolateurs, et un risque de claquage diélectrique sur les isolateurs.

Le Document FR-A-1 550 745 concerne des rondelles ou garnitures d'étanchéité qui sont utilisées de préférence avec des dispositifs permettant de régler la compression qui leur est appliquée.

Selon la page 3, colonne de droite, lignes 1 à 16 de ce document, on préfère que le matériau constituant la rondelle soit un métal relativement dur tel qu'un acier ou un alliage d'acier. Ce matériau peut servir de noyau principal à la rondelle et recevoir un revêtement ou placage en une matière moins dure telle que l'aluminium, le nickel, ou le PTFE, ou encore un vernis résistant à la chaleur.

Une résine polyester sans additif, telle que la résine ORKOT TL^{®} ou un vernis chargé en PTFE tel que le vernis TEGLISS^{®} ne sont ni cités ni suggérés dans ce document.

Le document US-A-5, 171, 622 décrit une structure stratifiée qui forme un élément de glissement qui peut être par exemple un coussinet de bielle pour un moteur diesel.

Le composite stratifié comprend une couche support en acier et une couche de glissement en alliage d'aluminium. Sur la surface supérieure de cette couche de glissement est formée une couche conforme, constituée d'un film mince, d'un vernis ou laque de glissement dans lequel des particules d'une substance favorisant le glissement sont incorporées.

La couche conforme est ensuite recuite dans la surface libre de la couche de glissement. La couche conforme peut comprendre, par exemple, une résine époxy contenant jusqu'à 15% en poids d'un mélange à parts égales de PTFE, de graphite fluoré et de disulfure de molybdène.

Cependant, il n'est ni décrit ni suggéré dans ce document que l'élément de glissement revêtu de ce vernis puisse être associé à une pièce correspondante en une résine polyester sans additif, telle que la résine ORKOT TL^{®}.

En outre, le domaine technique de ce document est très éloigné de celui des appareils électriques et notamment des disjoncteurs à moyenne ou haute tension.

Le document FR-A-2 592 211 a trait à un dispositif à piston et cylindre, en particulier pour des disjoncteurs à haute tension.

Il comporte un piston muni d'un segment d'étanchéité qui est guidé dans un cylindre.

Ce segment d'étanchéité est constitué d'une matière plastique « hautement résistante », de préférence en Téflon^{®} chargé de particules métalliques ou organiques, par exemple de particules de bronze.

Le piston comporte, en outre, un dispositif amortisseur, ainsi qu'un segment de décharge réalisé en bronze ou en laiton placé entre le dispositif amortisseur et le segment d'étanchéité.

Une résine polyester sans additif, telle que la résine ORKOT TL^{®}, n'est ni citée ni suggérée dans ce document.

Dans le cas où l'on met en oeuvre une bande de guidage dans le dispositif de ce document, la fonction d'étanchéité est assurée par du disulfure de molybdène.

Enfin, une usure du segment d'étanchéité a été constatée dans les dispositifs de ce document où l'on diminue la pression responsable de l'effritement du segment mais sans diminuer le frottement. Un tel dispositif est aussi connu du document US 3695149.

Il existe donc un besoin non encore satisfait pour un dispositif comprenant un piston apte à coulisser à l'intérieur d'un cylindre notamment pour assurer la coupure du courant dans les appareils électriques à moyenne et haute tension.

Il existe notamment un besoin pour un tel dispositif qui présente une durée de vie prolongée, bien au-delà des 10000 cycles d'ouverture - fermeture.

Il existe aussi un besoin pour diminuer les coefficients de frottement d'un tel dispositif dans le but de réduire les énergies de manoeuvre.

Il existe enfin un besoin pour un tel dispositif qui soit simple, fiable, facile à mettre en oeuvre, et d'un coût peu élevé.

Le but de la présente invention est de fournir un dispositif comprenant un piston apte à coulisser à l'intérieur d'un cylindre qui réponde entre autres aux besoins énumérés ci-dessus. Le but de la présente invention est aussi de fournir un tel dispositif qui réponde aux critères et aux exigences énumérés plus haut.

Le but de la présente invention est encore de fournir un tel dispositif qui ne présente pas les inconvénients, défauts, limitations et désavantages des dispositifs de l'art antérieur, et qui résolve les problèmes des dispositifs de l'art antérieur notamment en ce qui concerne l'usure de la bande de guidage et la formation de rayures dans le cylindre de contact.

### EXPOSE DE L'INVENTION

Ce but, et d'autres encore, sont atteints, conformément à l'invention par un dispositif à piston et cylindre pour un appareillage électrique à moyenne ou haute tension comprenant un piston qui coulisse à l'intérieur d'un cylindre creux, ledit piston étant muni d'une bande de guidage sur au moins une de ses surfaces en contact avec la surface interne du cylindre, caractérisé en ce que ladite bande de guidage est formée par un tissu polyester imprégné par une résine thermodurcissable contenant éventuellement une charge, et en ce que ladite surface interne du cylindre est revêtue d'un vernis comprenant en majorité (de préférence constitué en majorité par) du polytétrafluoroéthylène chargé avec un ou plusieurs composé(s) choisi(s) parmi les additifs, les charges et les liants.

Par majorité, on entend généralement une majorité en nombre de molécules.

Avantageusement, la résine thermodurcissable est une résine polyester/époxy.

De préférence, la résine thermodurcissable peut être une résine non-chargée.

Ou bien la résine thermodurcissable peut être une résine chargée.

Avantageusement, la charge peut se présenter sous la forme de particules.

Avantageusement, la charge peut être choisie parmi les composés autolubrifiants tels que le PTFE, le MoS₂, le graphite, le carbonate de calcium, et leurs mélanges.

De préférence, la charge est non-conductrice de l'électricité.

Avantageusement, le vernis comprend (de préférence est constitué par) une base lubrifiante de polytétrafluoroéthylène (PTFE), un liant qui est une résine thermodurcissable telle qu'une résine epoxyphénolique, et éventuellement un ou plusieurs additif(s), et/ou une ou plusieurs charge(s).

Avantageusement, le piston est constitué par un matériau choisi parmi l'aluminium et les alliages d'aluminium.

Avantageusement, le cylindre est en un matériau choisi parmi l'aluminium et les alliages d'aluminium.

La combinaison de matériaux spécifiques faisant l'objet de l'invention, à savoir : la combinaison d'une part d'un matériau spécifique pour le revêtement de la surface interne en aluminium du cylindre de contact et, d'autre part, d'un matériau spécifique pour la bande de guidage du piston coulissant dans ce cylindre n'est ni décrite ni suggérée dans l'art antérieur.

Le dispositif selon l'invention, qui comprend cette combinaison de matériaux spécifiques permet d'apporter une solution aux problèmes des dispositifs de l'art antérieur.

Le dispositif selon l'invention ne présente pas les inconvénients, défauts, limitations et désavantages des dispositifs de l'art antérieur.

En particulier, cette combinaison de matériaux permet d'obtenir un coefficient de frottement stable et faible sans que les matériaux ne soient endommagés.

En d'autres termes, le coefficient de frottement est diminué et stabilisé à une valeur peu élevée, et l'on n'observe plus d'usure de la bande de guidage et du cylindre de contact. La bande de guidage n'est pas détériorée et la surface intérieure du cylindre de contact n'est pas endommagée.

L'invention concerne, en outre, un appareillage électrique à moyenne ou haute tension qui comprend le dispositif selon l'invention, notamment pour assurer la coupure du courant dans ledit appareillage.

Cet appareillage électrique est notamment un disjoncteur à moyenne ou haute tension et en particulier un disjoncteur à SF₆.

Cet appareillage électrique peut être aussi un sectionneur, un sectionneur de mise à la terre, ou un guidage de barre de jeu de barres.

L'invention va maintenant être décrite en relation avec des modes de réalisation particuliers de celle-ci.

Cette description donnée à titre illustratif et non limitatif est faite en relation avec les dessins joints.

### BRÈVE DESCRIPTION DES DESSINS

- La Figure 1 est une vue en coupe latérale schématique d'un dispositif selon l'invention comprenant un piston qui coulisse dans un cylindre dit cylindre de contact ;
- La Figure 2 montre la zone de contact entre le cylindre de contact et la bande de guidage dans le dispositif de la Figure 1;
- La Figure 3 est une photographie qui montre le dispositif ou banc qui a été utilisé pour réaliser les essais des exemples ;
- La Figure 4 est un graphique qui donne le coefficient de frottement en fonction de la durée (en heures), pour l'essai de l'exemple 1, réalisé avec une bande de guidage en PTFE chargé à 60% en bronze sur une surface en aluminium nu ;
- La Figure 5 est une photographie qui montre le profil de la bande de guidage (à droite) et de la surface en aluminium (à gauche) à l'issue de l'essai de l'exemple 1 ;

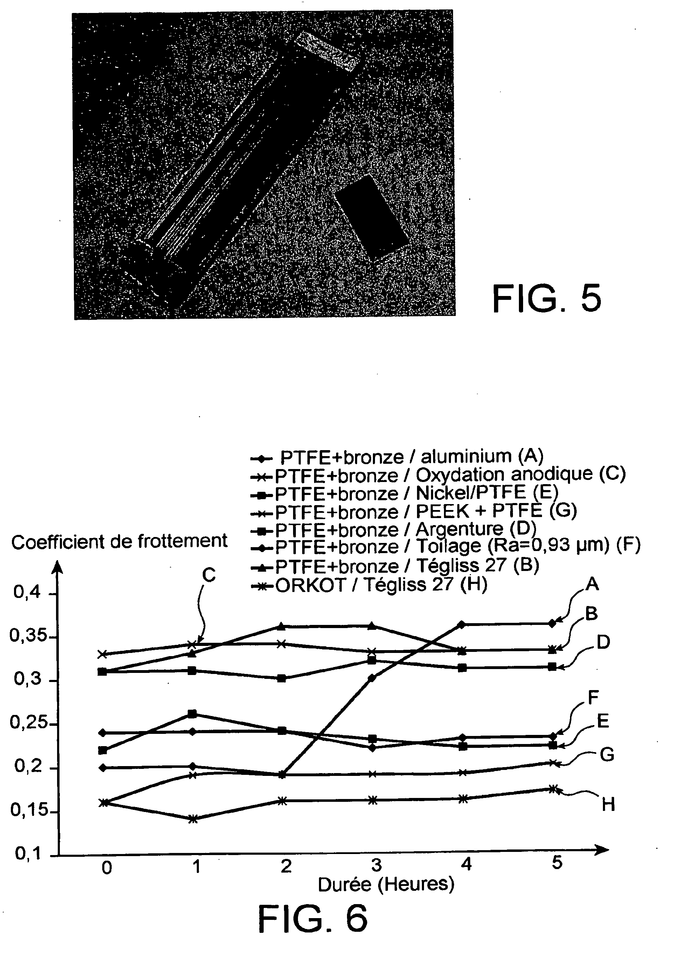

- La Figure 6 est un graphique qui donne le coefficient de frottement en fonction de la durée (en heures), pour les essais de l'exemple 2, réalisés avec des bandes de guidage qui sont en PTFE chargé à 60% en bronze sur une surface en aluminium nu (courbe A) ; ou sur une surface en aluminium pourvue d'un revêtement en Tegliss 27^{®} (courbe B) ; ou sur une surface en aluminium ayant subi un traitement d'oxydation anodique sulfurique ou OAS (courbe C) ; ou sur une surface en aluminium argentée (courbe D) ; ou sur une surface en aluminium pourvue d'un revêtement en PTFE chargé au nickel (courbe E) ; ou sur une surface en aluminium munie d'un toilage permettant d'obtenir une rugosité Ra=0,93µm (courbe F) ; ou sur une surface en aluminium pourvue d'un revêtement en polyétheréthercétone PEEK chargé en PTFE (courbe G) ; ou bien réalisés avec une bande de guidage en ORKOT TL^{®}, sur une surface en aluminium pourvue d'un revêtement en Tegliss 27^{®} (courbe H) ;
- La Figure 7 est une photographie de la surface en aluminium et de la bande de contact à l'issue de l'essai de l'exemple 2, réalisé avec une surface en aluminium pourvue d'un revêtement en polyétheréthercétone PEEK chargé en PTFE ;
- La Figure 8 est une photographie de la surface en aluminium et de la bande de guidage à l'issue de l'essai de l'exemple 2, réalisé avec une surface en aluminium ayant subi une opération d'argenture ;
- La Figure 9 est une photographie de la surface en aluminium et de la bande de guidage à l'issue de l'essai de l'exemple 2, réalisé avec une surface en aluminium ayant subi un traitement d'oxydation anodique sulfurique ou OAS;
- La Figure 10 est une photographie de la surface en aluminium et de la bande de contact à l'issue de l'essai de l'exemple 2, réalisé avec une bande de guidage en ORKOT TL^{®} et une surface en aluminium revêtue par le vernis de glissement TEGLISS 27^{®}.

### EXPOSÉ DÉTAILLÉ DE MODES DE RÉALISATION PARTICULIERS

Le dispositif selon l'invention est analogue aux dispositifs à piston et cylindre connus pour ce qui concerne les éléments, pièces qui le constituent mais il diffère fondamentalement de ces dispositifs connus car ces éléments sont réalisés en des matériaux spécifiques.

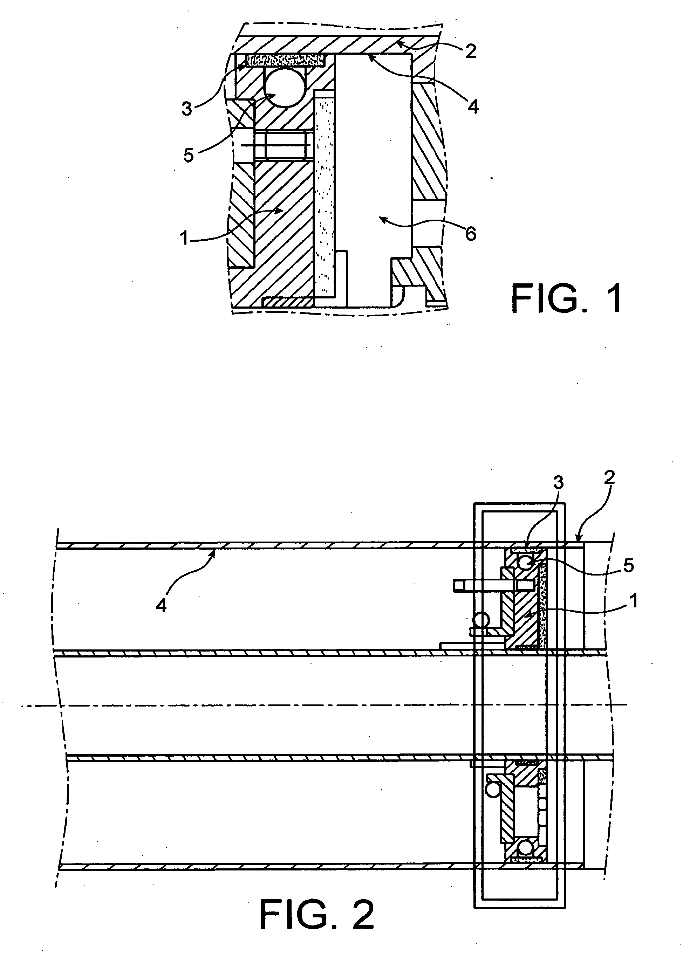

Comme on peut le voir sur la Figure 1, le dispositif selon l'invention comprend un piston (1), aussi appelé piston-valve, qui coulisse dans un cylindre dit cylindre de contact (2). Ce piston (1) est muni d'une bande de guidage (3) qui se trouve en contact avec la surface intérieure (4) de la paroi du cylindre (2).

Comme cela est montré de manière détaillée sur la Figure 2, un joint torique (5), généralement en élastomère est disposé à l'intérieur du piston-valve (1) et exerce une pression sur la bande de guidage (3) dans un sens perpendiculaire au sens de translation du piston (1) afin de maintenir la bande de guidage (3) en contact avec la surface intérieure (4) de la paroi du cylindre (2), autrement dit pour appliquer en permanence la bande de guidage (3) contre la surface intérieure, interne (4), de la paroi du cylindre (2).

La bande de guidage (3) a généralement une largeur de 15 mm et une épaisseur de 2,5 mm.

Conformément à l'invention, la bande de guidage (3) est réalisée en un matériau spécifique, à savoir un tissu de polyester imprégné d'une résine thermodurcissable, telle qu'une résine polyester/époxy, cette résine comprenant éventuellement au moins une charge.

Si la résine comprend au moins une charge, alors cette charge se présente généralement sous la forme de particules.

Cette charge peut être choisie parmi les composés autolubrifiants tels que le PTFE, le MoS₂, le graphite, le carbonate de calcium, et leurs mélanges. De préférence, on utilise des charges non conductrices de l'électricité, afin de ne pas générer de poussières conductrices.

De préférence, on utilise selon l'invention un tissu de polyester imprégné d'une résine polyester/époxy non chargée.

De tels tissus de polyester imprégné d'une résine polyester/époxy sont les produits ORKOT^{®} disponibles notamment auprès de la société TRELLEBORG AB.

Les qualités, grades des produits ORKOT^{®} sont les grades C 320, C 321, C 322, C 324, C 335, C 338, C 361, C 369, C 378, C 383, et C 410 ou selon une autre dénomination, les grades RL, SL, TL, TX, HT, VL, et TLM.

Suivant ces grades, le tissu de polyester est imprégné d'une résine polyester/époxy qui peut être chargée ou non chargée, par exemple avec une ou plusieurs parmi les charges mentionnées plus haut.

La qualité, grade d'ORKOT^{®} préférée utilisée pour la bande de guidage du dispositif selon l'invention est l'ORKOT TL^{®} ou C 321 dans lequel la résine n'est pas chargée.

L'ORKOT^{®} C 321 est un matériau qui présente d'excellentes propriétés d'isolation électrique et qui présente généralement les propriétés suivantes :
- résistance d'isolation (MOhm) : 2000 ;
- rigidité diélectrique à + 90°C (V/mm) (perpendiculairement à la stratification) : 210 ;
- constante diélectrique jusqu'à 1 MHz : 3,1.

Conformément à l'invention, la surface interne, intérieure du cylindre est revêtue d'un vernis spécifique constitué en majorité par du polytétrafluoroéthylène chargé avec des additifs et/ou des charges.

Généralement, la surface interne du cylindre est revêtue d'un tel vernis au moins dans la partie susceptible d'être en contact avec la bande de guidage lors du mouvement de translation du piston à l'intérieur du cylindre.

Un tel vernis est disponible sous la dénomination TEGLISS 27^{®} auprès de la société Techniques Surfaces (voir exemple b)).

Le dispositif selon l'invention peut être intégré dans tout appareillage électrique à moyenne ou haute tension afin d'assurer la coupure du courant dans ledit appareillage.

Dans un tel appareillage, le dispositif selon l'invention fonctionne de la manière suivante :
Le piston valve (1) se déplace à l'intérieur du cylindre de contact (2) lors de la coupure du courant. Lors de ce déplacement, le joint torique (5) maintient la bande de guidage (3) en contact avec le cylindre de contact (2). En coulissant, le piston valve (1), équipé du joint torique (5) et de la bande de guidage (3), comprime le volume de gaz (6) qui est ensuite expulsé sous forte pression.

Cet appareillage électrique est notamment un disjoncteur à moyenne ou haute tension et en particulier, un disjoncteur à SF₆.

L'appareillage électrique peut être aussi un sectionneur, un sectionneur de mise à la terre, un guidage de barre de jeu de barres.

L'invention va maintenant être décrite en référence aux exemples suivants donnés à titre illustratif et non limitatif.

### Exemples.

Dans ces exemples, on réalise des essais qui visent à déterminer le coefficient de frottement en fonction du temps pour des bandes de guidage réalisées en différents matériaux et pour des différents traitements ou revêtements de surface du cylindre de contact en aluminium.

### a) Matériaux pour la bande de guidage.

- l'ORKOT TL^{®} (résine polyester/époxy imprégnant un tissu polyester),

### b) Traitements ou revêtements de surface sur le cylindre de contact en aluminium.

Les traitements ou revêtements de surface qui ont été testés sur le cylindre de contact en aluminium sont :
- le vernis de glissement TEGLISS 27^{®} (PTFE). Selon la documentation technique du fournisseur, le TEGLISS 27^{®} serait une résine thermodurcissable avec base lubrifiante PTFE ; ou plus exactement un revêtement autolubrifiant comprenant une base lubrifiante de PTFE et un liant qui est une résine thermodurcissable, de couleur noir satiné. Selon la documentation technique du fournisseur, ce revêtement autolubrifiant est généralement appliqué par pulvérisation sur une épaisseur standard généralement de 8 à 15 µm et sa polymérisation se produit généralement en une durée de 30 minutes à 180°C. Toujours selon la documentation technique, ce revêtement a une tenue en température jusqu'à 250°C. Selon la même documentation technique, il a un faible coefficient de frottement et une bonne tenue à la corrosion et à l'usure.
   Une analyse de la composition chimique du TEGLISS 27^{®} par spectroscopie infrarouge a montré que ce revêtement comprend majoritairement (par majoritairement, on entend généralement majoritairement en nombre de molécules) du PTFE.
   Le spectre du TEGLISS 27^{®} comporte, outre le(s) pic(s) représentatif(s) du PTFE, également des pics correspondant à un ou plusieurs autres composés qui sont probablement une (des) charge(s) et/ou un (des) additif(s) et/ou un (des) liant(s).
- l'oxydation anodique sulfurique ou OAS,
- le nickel - PTFE,
- l'argenture,
- le toilage permettant d'obtenir une rugosité Ra = 0,93 µm,
- un polyétheréthercétone PEEK chargé PTFE.

A titre de comparaison, on a également réalisé des tests avec une bande de guidage en PTFE chargé à 60% en bronze sur une surface interne du cylindre de contact en aluminium nu, et qui n'a donc subi aucun traitement de surface et qui n'a été pourvue d'aucun revêtement .

### c) Description des essais réalisés :

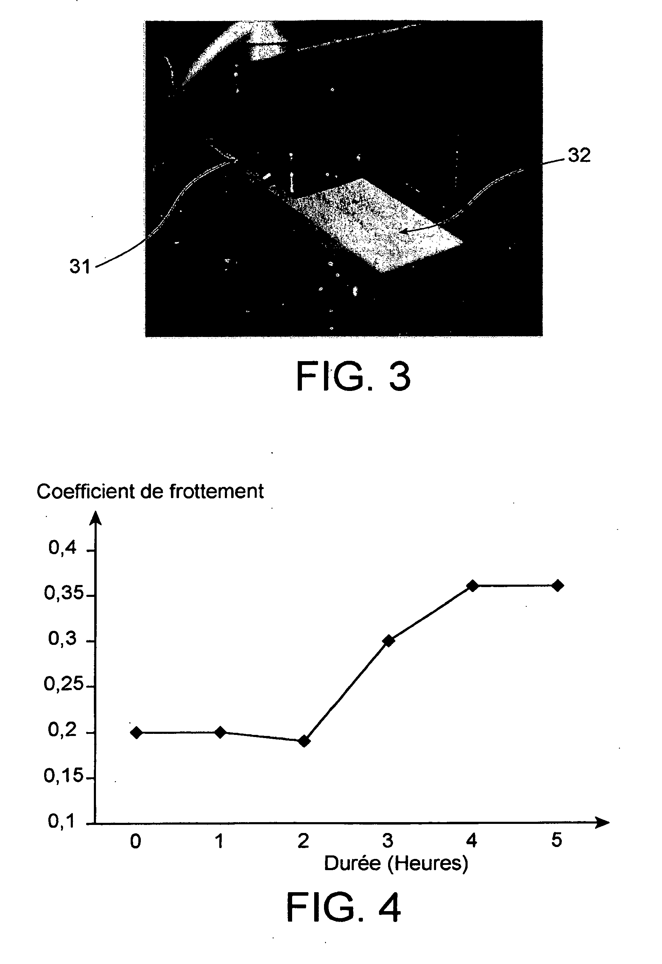

Les différentes bandes de guidage et les différents traitements ou revêtements de surface ont été testés sur un banc plan/plan (voir Figure 3) avec une bande de guidage (31) disposée dans un support capable de réaliser des mouvements de translation et une surface plane (32) qui simule la surface interne du cylindre de contact.

Les essais ont été réalisés dans les conditions suivantes :
- mouvement linéaire alternatif,
- course : +-84 mm,
- vitesse moyenne : 0,8 m/s,
- charge 9 daN,
- ambiance : air à température ambiante,
- durée : 5 heures soit 85000 cycles.

### Exemple 1 :

Dans cet exemple, on effectue des essais avec une bande de guidage en PTFE chargé à 60% en bronze sur une surface (qui représente la surface interne du cylindre de contact) en aluminium nu : il s'agit-là de la solution couramment adoptée actuellement dans l'industrie.

Le graphique de la Figure 4 montre que le coefficient de frottement est irrégulier.

L'usure de la bande de guidage et de l'aluminium est constatée au bout de 2 heures d'essai, ce qui se traduit par une nette augmentation du coefficient de frottement.

Le profil des matériaux en fin d'essai est présenté sur la Figure 5.

Cet exemple confirme que les solutions envisagées devront donc remplir deux conditions, à savoir :
- un coefficient de frottement stable au cours de l'essai,
- des profils de matériaux non endommagés.

### Exemple 2 :

Dans cet exemple, on effectue des essais de frottement entre une bande de guidage en PTFE chargé en bronze ou une bande de guidage en ORKOT TL^{®} sur des surfaces en aluminium nu, ou sur des surfaces en aluminium qui ont subi divers traitements de surface, ou sur des surfaces qui ont été pourvues de divers revêtements de surface.

Un essai a été réalisé avec bande de guidage en PTFE chargé en bronze et une surface en aluminium nu (courbe A, Figure 6).

Un essai a été réalisé avec une bande de guidage en PTFE chargé en bronze et une surface en aluminium qui est une surface ayant subi une oxydation anodique sulfurique ou OAS (courbe C).

Un essai a été réalisé avec une bande de guidage en PTFE chargé en bronze et une surface en aluminium qui est une surface ayant subi une opération d'argenture (courbe D).

Un essai a été effectué avec une bande de guidage en PTFE chargé en bronze et une surface en aluminium revêtue de TEGLISS 27^{®} (courbe B).

Un essai a été effectué avec une bande de guidage en PTFE chargé en bronze et une surface en aluminium revêtue d'un dépôt de Nickel chimique dans lequel sont incluses des particules de PTFE (courbe E).

Un essai a été réalisé avec une bande de guidage en PTFE chargé en bronze et une surface en aluminium pourvue d'un toilage permettant d'obtenir une rugosité Ra=0,93 µm (courbe F).

Un essai a été réalisé avec une bande de guidage en PTFE chargé bronze et une surface en aluminium pourvue d'un revêtement PEEK chargé en PTFE (courbe G).

Enfin, dans un dernier essai, la bande de guidage est en ORKOT TL^{®} et la surface en aluminium est une surface revêtue de TEGLISS 27^{®} (courbe H).

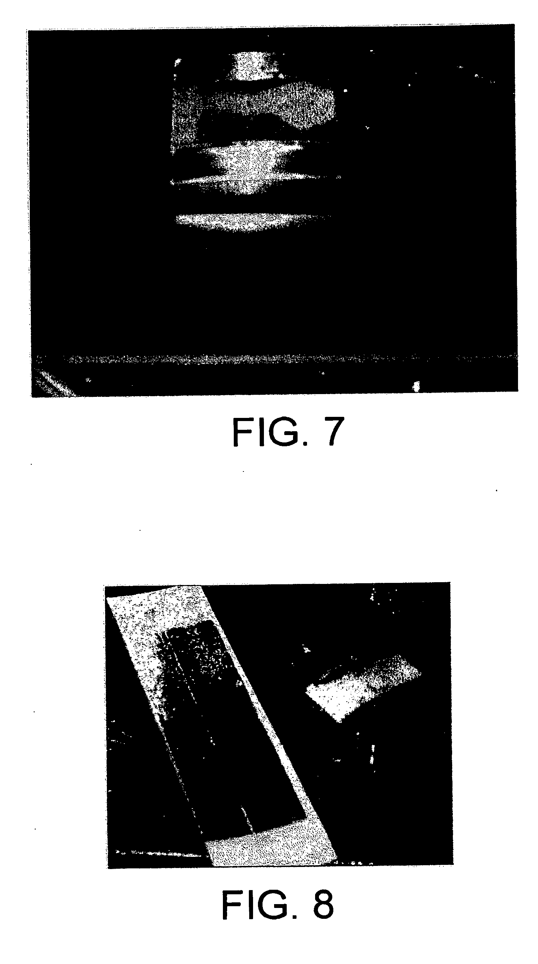

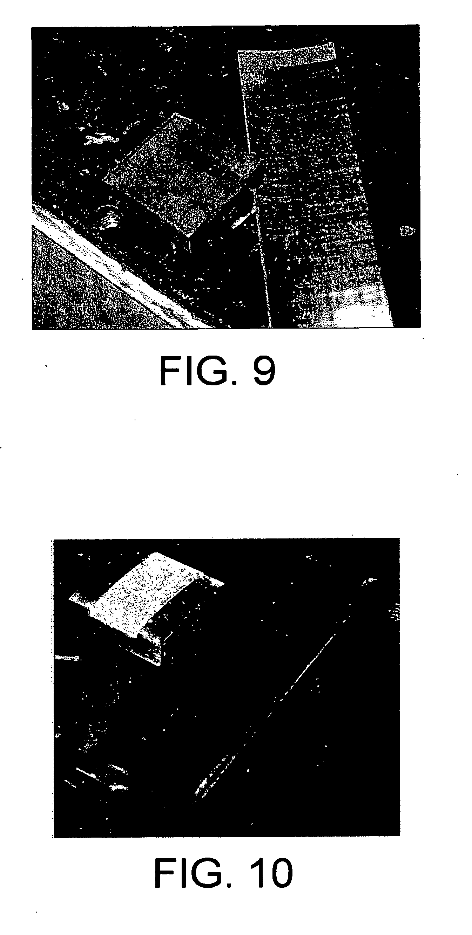

Lors des deux essais réalisés avec les surfaces en aluminium ayant subi une opération d'argenture ou un traitement d'OAS, on observe un coefficient de frottement stable durant l'essai mais les profils de matériaux sont endommagés comme cela est montré sur les photographies des Figures 8 et 9.

Le meilleur compromis entre coefficient de frottement et profil des matériaux est obtenu avec la bande de guidage en ORKOT TL^{®} et le revêtement en TEGLISS 27^{®} comme cela est montré sur la photographie de la Figure 10.

Le Tableau 1 ci-dessous permet de comparer et classer les différentes combinaisons testées.

**TABLEAU 1**

| Couple de solution testé | Coefficient t de frottement initial | Nombre de cycles durant lesquels le coefficient de frottement est stable | Usure | Classement performance de la solution |
|---|---|---|---|---|
| PTFE + bronze / aluminium nu | 0,2 | 34 000 | Usure de la bande de guidage Rayure de l'aluminium | 5 |
| PTFE + bronze / aluminium toilé (Ra=0,93 µm) | 0,24 | 85 000 | Usure de la bande de guidage Transfert de bronze sur l'aluminium | 3 |
| PTFE + bronze / aluminium + PEEK - PTFE | 0,16 | 85 000 | Léger polissage des surfaces | 2 |
| PTFE + bronze / aluminium argenté | 0,31 | 85 000 | Légère usure de la bande de guidage Fines rayures de l'aluminium | 3 |
| PTFE + bronze / aluminium + nickel - PTFE | 0,22 | 85 000 | Usure de la bande de guidage Transfert de bronze sur l'aluminium | 3 |
| PTFE + bronze / aluminium + Oxydation anodique sulfurique | 0,33 | 85 000 | Usure de la bande de guidage Transfert de bronze sur l'aluminium | 4 |
| PTFE + bronze / aluminium + TEGLISS^{®} | 0,31 | 85 000 | Légère usure de la bande de guidage | 4 |
| ORKOT TL^{®} / aluminium + TEGLISS^{®} | 0,16 | 85 000 | Léger polissage des surfaces | 1 |

Dans les conditions utilisées dans ces essais, la solution, combinaison actuelle avec une bande de guidage en PTFE chargé à 60% en bronze en frottement sur de l'aluminium, a une durée de vie qui n'excède pas 35000 cycles.

Après 35000 cycles, le coefficient de frottement de cette combinaison augmente fortement. On observe une usure importante de la bande de guidage et des rayures se forment à l'intérieur du cylindre de contact.

L'utilisation de traitements de surface ou de revêtement tels que l'argenture ou l'oxydation anodique permet de stabiliser le coefficient de frottement des matériaux mais on observe toujours une usure des bandes de guidage ce qui peut entraîner la formation de particules.

La combinaison de matériaux spécifiques pour la bande de guidage et pour le revêtement du cylindre de contact selon l'invention, permet de manière surprenante de diminuer et de stabiliser le coefficient de frottement à une valeur faible et de supprimer l'usure de la bande de guidage et du cylindre de contact qui n'est plus du tout observée (Figure 10).

## Revendications

1. Dispositif à piston et cylindre pour un appareillage électrique à moyenne ou haute tension comprenant un piston (1) qui coulisse à l'intérieur d'un cylindre creux (2), ledit piston (1) étant muni d'une bande de guidage (3) sur au moins une de ses surfaces en contact avec la surface interne (4) du cylindre, **caractérisé en ce que** ladite bande de guidage (3) est formée par un tissu polyester imprégné par une résine thermodurcissable contenant éventuellement une charge, et **en ce que** ladite surface interne (4) du cylindre est revêtue d'un vernis comprenant en majorité du polytétrafluoroéthylène chargé avec un ou plusieurs composé(s) choisi(s) parmi les additifs, les charges et les liants.

2. Dispositif selon la revendication 1, dans lequel la résine thermodurcissable est une résine polyester/époxy.

3. Dispositif selon l'une quelconque des revendications 1 et 2, dans lequel la résine thermodurcissable est une résine non chargée.

4. Dispositif selon l'une quelconque des revendications 1 et 2, dans lequel la résine thermodurcissable est une résine chargée.

5. Dispositif selon la revendication 4, dans lequel la charge se présente sous la forme de particules.

6. Dispositif selon l'une quelconque des revendications 4 et 5, dans lequel la charge est choisie parmi les composés autolubrifiants tels que le PTFE, le MoS₂, le graphite, le carbonate de calcium, et leurs mélanges.

7. Dispositif selon l'une quelconque des revendications 4 à 6, dans lequel la charge est non-conductrice de l'électricité.

8. Dispositif selon l'une quelconque des revendications précédentes, dans lequel le vernis comprend une base lubrifiante de polytétrafluoroéthylène (PTFE), un liant qui est une résine thermodurcissable telle qu'une résine époxyphénolique, et éventuellement un ou plusieurs additif(s) et/ou une ou plusieurs charge(s).

9. Dispositif selon l'une quelconque des revendications précédentes, dans lequel le piston est constitué par un matériau choisi parmi l'aluminium et les alliages d'aluminium.

10. Dispositif selon l'une quelconque des revendications précédentes, dans lequel le cylindre est en un matériau choisi parmi l'aluminium et les alliages d'aluminium.

11. Appareillage électrique à moyenne ou haute tension comprenant le dispositif selon l'une quelconque des revendications 1 à 10.

12. Appareillage électrique selon la revendication 11, qui est un disjoncteur à moyenne ou haute tension, en particulier un disjoncteur à SF₆.

13. Appareillage électrique selon la revendication 11, qui est un sectionneur, un sectionneur de mise à la terre, ou un guidage de barre de jeu de barres.

## Patentansprüche

1. Kolbenzylindergerät für ein elektrisches Mittel- oder Hochspannungsgerät, umfassend einen Kolben (1), der im Innern eines Hohlzylinders (2) gleitet, wobei der genannte Kolben (1) auf wenigstens einer seiner mit der Innenoberfläche (4) des Zylinders Kontakt habenden Oberflächen mit einem Führungsband (3) versehen ist,
**dadurch gekennzeichnet, dass** das Führungsband (3) durch ein Polyestergewebe gebildet wird, imprägniert mit einem eventuell einen Füllstoff enthaltenden wärmehärtbaren Harz, und dadurch, dass die genannte Innenoberfläche (4) des Zylinders mit einem Lack überzogen ist, der überwiegend aus Polytetrafluorethylen besteht und eine oder mehrere Verbindung(en) umfasst, ausgewählt unter den Zusatzstoffen, den Füllstoffen und den Bindemitteln.

2. Gerät nach Anspruch 1, bei dem das wärmehärtbare Harz ein Polyester-/Epoxidharz ist.

3. Gerät nach einem der Ansprüche 1 und 2, bei dem das wärmehärtbare Harz ein Füllstoffsfreies Harz ist.

4. Gerät nach einem der Ansprüche 1 und 2, bei dem das wärmehärtbare Harz ein Füllstoffshaltiges Harz ist.

5. Gerät nach Anspruch 4, bei dem der Füllstoff sich in der Form von Teilchen präsentiert.

6. Gerät nach einem der Ansprüche 4 und 5, bei dem der Füllstoff ausgewählt wird unter den selbstschmierenden Verbindungen wie zum Beispiel PTFE, MoS₂, Graphit, Calciumcarbonat, und ihren Mischungen.

7. Gerät nach einem der Ansprüche 4 bis 6, bei dem der Füllstoff elektrisch nichtleitend ist.

8. Gerät nach einem der vorhergehenden Ansprüche, bei dem der Lack eine Polytetrafluorethylen-Schmierbasis, ein Bindemittel, das ein wärmehärtbares Harz wie zum Beispiel ein Epoxidphenolharz ist, und eventuell einen oder mehrere Zusatzstoff(e) und/oder einen oder mehrere Füllstoff(en) enthält.

9. Gerät nach einem der vorhergehenden Ansprüche, bei dem der Kolben aus einem unter Aluminium und den Aluminiumlegierungen ausgewählten Material besteht.

10. Gerät nach einem der vorhergehenden Ansprüche, bei dem der Zylinder aus einem unter Aluminium und den Aluminiumlegierungen ausgewählten Material ist.

11. Elektrisches Mittel- oder Hochspannungsgerät umfassend das Gerät nach einem der Ansprüche 1 bis 10.

12. Elektrisches Gerät nach Anspruch 11, das ein Mittel- oder Hochspannung sleitungsschutzschalter ist, insbesondere ein SF₆-Leitungsschutzschalter.

13. Elektrisches gerät nach Anspruch 11, das ein Trennschalter, ein Erdungstrennschalter oder eine Sammelschienen-Schienenführung bzw. Sammelschienenführung ist.

## Claims

1. Cylinder and piston device for a medium or high voltage electric appliance comprising a piston (1) which slides inside a hollow cylinder (2), said piston (1) being provided with a guide strip (3) on at least one of the surfaces thereof into contact with the inner surface (4) of the cylinder, **characterised in that** said guide strip (3) is formed of a polyester fabric impregnated with a thermosetting resin optionally containing a filler, and **in that** said inner surface (4) of the cylinder is coated with a varnish comprising a majority of polytetrafluoroethylene filled with one or more compound(s) selected from additives, fillers and binders.

2. Device according to claim 1, wherein the thermosetting resin is a polyester/epoxy resin.

3. Device according to any one of claims 1 and 2, wherein the thermosetting resin is an unfilled resin.

4. Device according to any one of claims 1 and 2, wherein the thermosetting resin is a filled resin.

5. Device according to claim 4, wherein the filler comes in the form of particles.

6. Device according to any one of claims 4 and 5, wherein the filler is selected from self-lubricating compounds such as PTFE, MoS₂, graphite, calcium carbonate, and mixtures thereof.

7. Device according to any one of claims 4 to 6, wherein the filler is electrically non-conductive.

8. Device according to any one of the preceding claims, wherein the varnish comprises a lubricating base of polytetrafluoroethylene (PTFE), a binder that is a thermosetting resin such as an epoxy phenolic resin, and optionally one or more additive(s) and/or one or more filler(s).

9. Device according to any one of the preceding claims, wherein the piston is constituted of a material selected from aluminium and alloys of aluminium.

10. Device according to any one of the preceding claims, wherein the cylinder is made of a material selected from aluminium and alloys of aluminium.

11. Medium or high voltage electrical appliance including the device according to any one of claims 1 to 10.

12. Electrical appliance according to claim 11, which is a medium or high voltage circuit breaker, in particular a SF₆ circuit breaker.

13. Electrical appliance according to claim 11, which is a disconnector, an earthing disconnector, or a bar guiding device of a busbar.
